Europäisches Patentamt

European Patent Office

Office européen des brevets

(19)

(11) **EP 0 792 474 B1**

(12) **FASCICULE DE BREVET EUROPEEN**

(45) Date de publication et mention
de la délivrance du brevet:
**29.07.1998 Bulletin 1998/31**

(21) Numéro de dépôt: **95940308.0**

(22) Date de dépôt: **14.11.1995**

(51) Int Cl.6: **G02F 1/1335**, G02B 5/30

(86) Numéro de dépôt international:
**PCT/FR95/01493**

(87) Numéro de publication internationale:
**WO 96/15473 (23.05.1996 Gazette 1996/23)**

(54) **DISPOSITIF D'AFFICHAGE A CRISTAL LIQUIDE UTILISANT DES FILMS BIREFRINGENTS**

FLÜSSIGKRISTALLANZEIGEGERÄT UNTER VERWENDUNG DOPPELBRECHENDER FILME

LIQUID CRYSTAL DISPLAY DEVICE USING BIREFRINGENT FILMS

(84) Etats contractants désignés:
**DE FR GB NL**

(30) Priorité: **14.11.1994 FR 9413623**

(43) Date de publication de la demande:
**03.09.1997 Bulletin 1997/36**

(73) Titulaire: **THOMSON-LCD**
**75008 Paris (FR)**

(72) Inventeurs:
- **ROYER, Pascal**
  **F-92050 Paris-La Défense (FR)**
- **HAAS, Gunther**
  **F-92050 Paris-La Défense (FR)**
- **LEHUREAU, Jean-Claude**
  **F-92050 Paris-La Défense (FR)**

(74) Mandataire: **Ruellan-Lemonnier, Brigitte**
**THOMSON multimedia,**
**46 quai A. Le Gallo**
**92648 Boulogne Cédex (FR)**

(56) Documents cités:
**EP-A- 0 349 900**      **EP-A- 0 376 696**
**EP-A- 0 487 047**      **US-A- 5 227 903**

- **PATENT ABSTRACTS OF JAPAN vol. 018 no.**
  **349 (P-1763) ,30 Juin 1994 & JP,A,06 088962**
  **(CASIO COMPUT CO LTD) 29 Mars 1994, &**
  **US,A,5 440 413 (KIKUCHI ET AL.) 8 Août 1995**
- **PATENT ABSTRACTS OF JAPAN vol. 017 no.**
  **045 (P-1476) ,28 Janvier 1993 & JP,A,04 258923**
  **(TOSHIBA CORP) 14 Septembre 1992,**

## Description

La présente invention concerne un dispositif d'affichage électro-optique modulant directement la lumière le traversant, utilisé soit en transmission, soit en réflexion, soit en projection sur un écran. Ces dispositifs mettent en oeuvre une couche de cristal liquide nématique en hélice disposée entre deux polariseurs croisés et sont utilisés en particulier comme élément image ("pixel" pour Picture Element en langue anglaise) pour des écrans plats à matrice active adressés par des circuits de commande ("Drivers" en langue anglaise) périphériques ou intégrés à l'écran, destinés à l'affichage d'images vidéo.

Dans une cellule à cristal liquide nématique en hélice, les molécules sont orientées parallèlement au substrat par des couches d'alignement, de telle sorte que, en l'absence de champ électrique, elles forment une hélice dans l'épaisseur de la cellule. Lorsque cette cellule est placée entre deux polariseurs croisés, c'est à dire que leurs directions de polarisation sont croisées, la lumière polarisée rectilignement par le polariseur entre dans la cellule, subit une rotation en traversant la couche de cristal liquide et peut passer à travers l'analyseur. Le dispositif est dans l'état non activé et présente alors une forte transmission de la lumière

Lorsqu'un champ électrique est appliqué perpendiculairement au substrat, les molécules s'orientent parallèlement au champ et se redressent perpendiculairement au substrat. La structure en hélice est détruite, et la lumière polarisée ne subit plus de rotation à sa traversée dans la cellule, de sorte qu'elle est absorbée par l'analyseur. Le dispositif est dans l'état activé saturé et présente une très faible transmission.

Des transmissions intermédiaires sont obtenues par application de champs électriques intermédiaires de sorte que le dispositif permet l'affichage d'images vidéo nécessitant de nombreux niveaux de gris. L'utilisation de filtres colorés et de ces nombreux niveaux de gris permet l'affichage d'images vidéo en couleurs.

Dans de tels dispositifs, l'image affichée présente, par construction, des fortes inhomogénéités lorsque les conditions angulaires d'observation changent.

En effet, lorsque le dispositif est observé suivant la normale au substrat, il présente un très bon rapport de contraste (rapport de la transmission à l'état non activé sur la transmission à l'état activé) du fait de la très faible transmission de l'état activé. Lorsque le dispositif est observé avec une direction inclinée par rapport à la normale au substrat, la transmission de l'état activé augmente fortement et le rapport de contraste chute du fait de l'augmentation de la biréfringence des molécules orientées perpendiculairement au substrat. De ce fait, la zone angulaire d'observation de tels dispositifs est réduite à des directions proches de la normale au substrat.

Lorsqu'une image vidéo est affichée par un tel dispositif et observée suivant une direction inclinée par rapport à la normale au substrat, le même phénomène de variation de la transmission affecte aussi bien le niveau saturé que tous les niveaux de gris, mais la loi des variations est différente pour chaque niveau. Ceci entraîne des phénomènes d'inversion de contraste, c'est-à-dire qu'un niveau plus sombre qu'un autre suivant la normale devient plus clair que ce dernier suivant une direction inclinée. Ces phénomènes réduisent encore la zone angulaire d'observation des images vidéo.

Il existe plusieurs solutions permettant de corriger en partie ces défauts. Certaines portent sur la modification de la structure spatiale de la cellule elle-même par la création dans chaque élément d'images (pixel) de plusieurs domaines à l'intérieur desquels, soit l'orientation des molécules du cristal liquide sur le substrat, soit l'orientation du champ électrique appliqué, soit l'intensité de ce champ, est différent. Ces solutions conduisent à une plus grande complexité de la fabrication des cellules. D'autres solutions proposent l'ajout de dispositifs optiques de façon à diminuer l'inclinaison d'un rayon lumineux pénétrant ou émergeant de la cellule pour que ceux-ci soient situés dans la zone la plus favorable à leur modulation. Ces solutions conduisent aussi à une plus grande complexité du dispositif.

Enfin de nombreuses solutions portent sur l'ajout de couches biréfringentes entre la cellule et le polariseur et/ou l'analyseur. Ces solutions se proposent de diminuer la transmission de l'état activé lorsque le dispositif est observé suivant une direction inclinée, elles ne font pas mention d'une quelconque correction de phénomènes d'inversion de contraste. C'est le cas par exemple de la solution proposée par le brevet EP-A-350 383 de Stanley Electric Co. LTD. Cette solution consiste à corriger la biréfringence des molécules de cristal liquide nématique en hélice lorsque la cellule est dans l'état activé par l'ajout d'un ou deux films biréfringents uniaxes présentant une anisotropie d'indice de réfraction négative dans la direction perpendiculaire au substrat. La transmission de l'état activé lorsque le dispositif est observé suivant une direction inclinée est fortement diminuée. Cela conduit à l'élargissement de la zone angulaire d'observation dans laquelle le rapport de contraste est suffisant, mais aucun effet n'est mentionné quant aux inversions de contraste des niveaux saturés ou non. Une seconde solution est proposée dans le brevet EP-A-349 900 de Stanley Electric Co qui propose la même correction que la solution précédente en remplaçant chaque film uniaxe à anisotropie d'indices de réfraction négative dans le plan, par deux films à anisotropie d'indices de réfraction positive dont les axes sont dans le plan et croisés à 90° de façon à ce que leur activité optique cumulée soit équivalente au dispositif précédent. Ainsi, l'effet sur l'élargissement de la zone angulaire d'observation est équivalent, mais là encore aucun effet n'est mentionné quant aux inversions de contraste.

JP-A-6-88962 (voir aussi US-A-5,440,413 qui est un membre de la famille de JP-A-6-88962 mais qui a été publié après la date de priorité de la présente demande) divulgue une cellule électrooptique comprenant un film biréfringent à anisotropie d'indices de réfraction biaxe tel que $N_y < N_z < N_x$ ($N_z$ est l'indice perpendiculaire au plan du film).

La présente invention permet de corriger ces phénomènes d'inversion de contraste de façon à élargir la zone d'observation d'images vidéo sur les dispositifs à cristal liquide nématique en hélice.

En effet la présente invention concerne une cellule électro optique comme définie dans la revendication 1.

Ce (ou ces) films biréfringents peuvent être situés entre le polariseur et le premier substrat, et/ou entre l'analyseur et le second substrat.

En particulier, ce ou ces films sont orientés de manière à ce que leurs indices de réfraction maximums soient dans des directions parallèles aux directions passantes du polariseur et/ou de l'analyseur de la cellule.

De préférence, les directions des axes des indices maximum de films supplémentaires de compensation sont croisées avec les molécules de cristal liquide les plus proches d'un angle compris entre 70° et 110°. Enfin, ces dispositifs selon l'invention ont des retards $\Delta n = (ne - no)xd$, où $d=$ l'épaisseur de la couche biréfringente, compris entre 50 et 300 nm et des rapports de biaxialité $r = (nz-no)/(ne-no)$ compris entre -3 et 0. Un rapport $r=0$ correspond à un milieu biréfringent uni-axe.

La présente invention concerne aussi un écran à cristaux liquides comme défini dans la revendication 9.

Ces dispositifs selon l'invention ont l'avantage d'être simples, bon-marchés et de permettre un très bon contraste ainsi qu'une absence d'inversion de contraste pour un angle de vision très large.

La présente invention sera mieux comprise et des avantages supplémentaires apparaîtront à la lecture de la description qui va suivre illustrée par les figures suivantes :

- les figures 1a à 1c représentent trois modes de réalisation différents de la présente invention ;
- la figure 2 représente une vue éclatée en perspective du troisième mode de réalisation selon l'invention de la figure 1c;
- les figures 3 et 4 représentent, selon l'état de l'art, l'évolution de la transmittance photopique théorique de différents niveaux de gris répartis régulièrement sur une échelle logarithmique suivant la normale, lorsque l'inclinaison de la direction d'observation change suivant l'azimut, parallèle à l'axe (ox) ou (oy) ;
- les figures 5 et 6 représentent cette même évolution de la transmittance mais selon la présente invention,
- la figure 7 représente un exemple de structure biaxiale de l'anisotropie des indices de réfraction d'exemples de films utilisés pour mettre en oeuvre la présente invention,
- la figure 8 représente une vue en coupe de la symétrie du troisième mode de réalisation selon l'invention des figures 1c et 2,

- et les figures 9a à 9c représentent les conoscopes de dispositifs selon l'invention.

Dans les différentes figures, les éléments ayant la même fonction ont gardés les mêmes références d'une figure à l'autre.

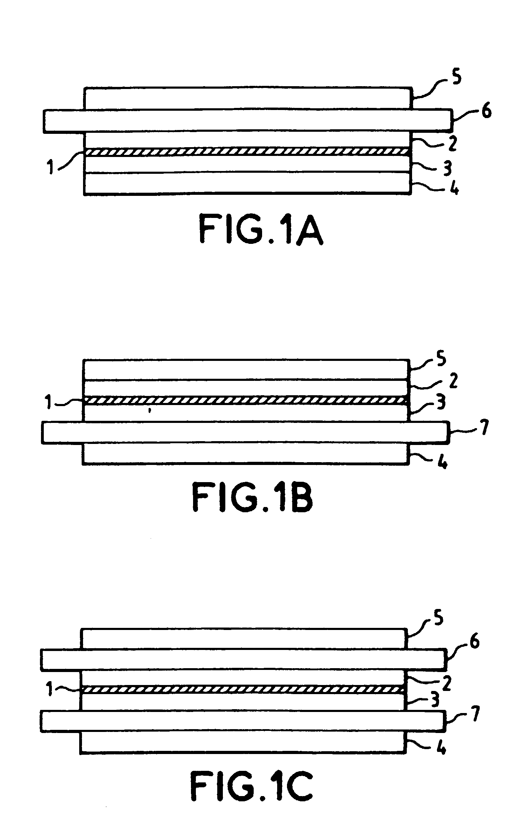

Selon la figure la à 1c, la cellule à cristal liquide est constituée d'une couche de cristal liquide 1 enfermée entre deux substrats 2 et 3, et est placée entre un polariseur 4 et un analyseur 5 dont les axes de polarisation sont croisés. Selon une caractéristique importante de la présente invention, une couche biréfringente à anisotropie d'indice de réfraction biaxe 6 est placée entre la cellule et l'analyseur 5 suivant la disposition de la figure la. La disposition de la figure 1b correspond à un second mode de réalisation où la couche biréfringente à anisotropie d'indice de réfraction biaxe 7 est intercalée entre la cellule et le polariseur 4. La figure 1c montre une troisième disposition selon l'invention où deux couches biréfringentes à anisotropie d'indice de réfraction biaxe 6 et 7 sont intercalées entre la cellule et l'analyseur 5 d'une part, et entre la cellule et le polariseur 4 d'autre part. On pourrait aussi utiliser un polarisateur à faible biréfringence sans utiliser une couche supplémentaire spécifique 6, mais cela conduit à une détérioration du contraste. De préférence, le cristal liquide utilisé est un cristal liquide nématique en hélice (ou TN pour "Twisted Nématic" en langue anglaise) dont la torsion ("twist" en langue anglaise) totale au repos des molécules est comprise en 80° et 100°.

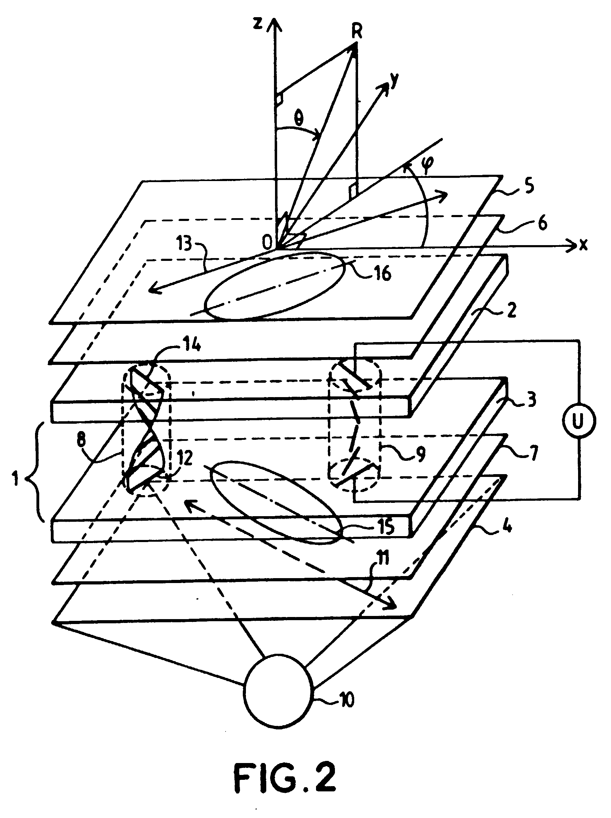

Sur la figure 2, vue éclatée en perspective du premier mode de réalisation de l'invention de la figure 1c, on retrouve la cellule comprenant la couche de cristal liquide 1 entre les deux substrats 2 et 3. L'ensemble est placé entre le polariseur 4 et l'analyseur 5 et est éclairé par une source lumineuse 10. (R) est la direction d'observation, elle forme un angle $\theta$ par rapport à la normale (oz) au plan (xoy) de l'analyseur 5 et un angle $\varphi$ par rapport à la normale (ox) au plan (yoz). La zone cylindrique 8 montre la structure nématique en hélice du cristal liquide au repos, qui permet à la lumière émergeant du polariseur 4 de passer à travers la cellule en subissant une rotation proche de celle du cristal liquide et de passer ensuite à travers l'analyseur 5. La zone cylindrique 9 montre l'état activé dans lequel la structure en hélice est détruite sous l'action du champs électrique U appliqué entre les électrodes transparentes. Au-delà d'une certaine valeur de champ appliqué, la molécule médiane du cylindre 8 bascule dans une direction caractérisée par un vecteur de coordonnées x=0, y>0 et z>0. Le sens de basculement est induit par le mode de frottement des surfaces d'ancrage des parois internes des substrats 2 et 3 ; il induit une variation du niveau de transmission vu sous des incidences R caractérisées par :

$$\varphi = 90°, \ \theta > 0 \ \text{ou} \ \theta < 0,$$

c'est-à-dire suivant l'azimut vertical. Le polariseur 4 est disposé de façon à ce que la direction 11 de la lumière polarisée rectilignement entrant dans la cellule soit croisée avec la direction 12 des premières molécules de cristal liquide rencontrées par la lumière. De même, l'analyseur 5 est disposé de façon à autoriser la lumière émergeante de la cellule à passer dans la direction 13, croisée avec celle des dernières molécules rencontrées 14.

Selon une caractéristique importante de la présente invention, une couche biréfringente à anisotropie d'indice de réfraction biaxe 7 est intercalée entre la cellule et le polariseur 4, orientée de sorte que l'indice de réfraction maximum soit dans la direction 15 parallèle à la direction 11 du polariseur 4. De même, une autre couche biréfringente à anisotropie d'indice de réfraction biaxe 6 est intercalée entre la cellule et l'analyseur 5, orientée de sorte que l'indice de réfraction maximum soit dans la direction 16 parallèle à la direction 13 de l'analyseur 5.

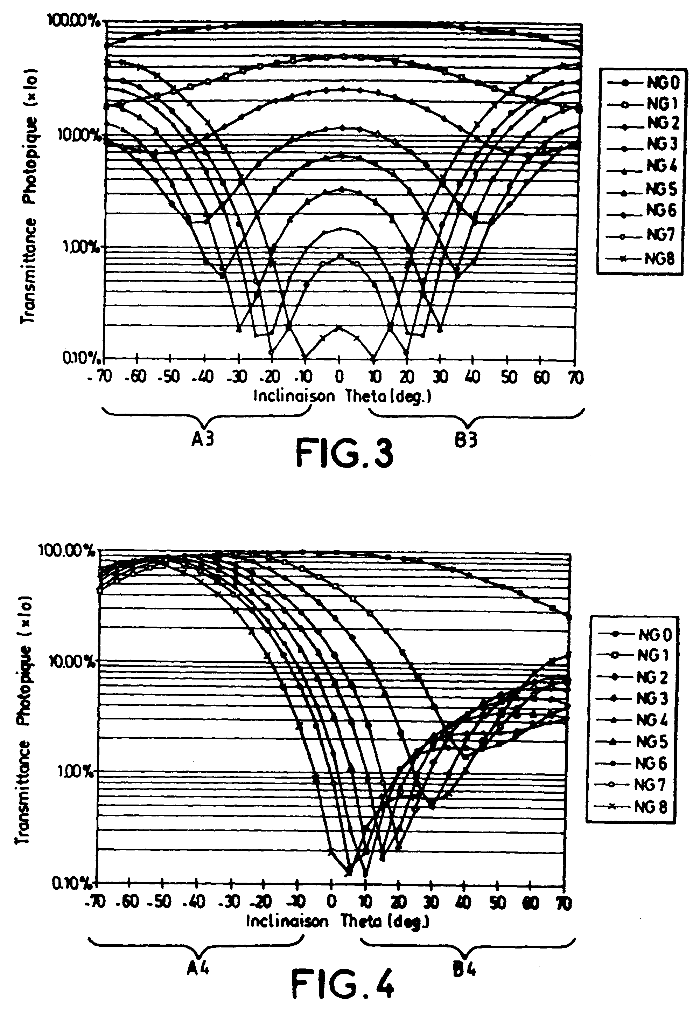

Sans les couches 6 et 7, le dispositif des figures 1 et 2 est de type connu et ses performances électro-optiques sont décrites dans les figures 3 et 4. Ainsi, la figure 3 montre un exemple de l'évolution pour un dispositif connu de la transmittance photopique théorique (transmission convoluée par la courbe de sensibilité de l'oeil standard ouvert à 2° dans les conditions photopiques) de différents niveaux de gris, répartis régulièrement sur une échelle logarithmique suivant la normale, lorsque l'inclinaison $\theta$ de la direction d'observation (R) change suivant l'azimut horizontal ($\phi$=0) parallèle à l'axe (ox). Les paramètres NG1 à NG8 représentent différents niveaux de gris correspondant à différentes tensions appliquées, les sept premiers plans lumineux sont étagés régulièrement sur l'échelle logarithmique correspondant à la sensibilité logarithmique de l'oeil, le dernier est le niveau saturé. Ce sont les mêmes paramètres utilisés dans les figures 4, 5 et 6. On constate une forte inhomogénéité des transmittances donnant de fortes variations de rapport de contraste et de nombreuses inversions de contraste dans les zones A3 ($\theta$<-15°) et B3 ($\theta$>15°), même pour des inclinaisons $\theta$ aussi faible que 15°.

De même la figure 4 montre un angle de l'évolution pour un dispositif connu de la transmittance photopique théorique des mêmes niveaux de gris, lorsque l'inclinaison $\theta$ de la direction d'observation change suivant l'azimut vertical ($\phi$=90), parallèle à l'axe Y. On observe aussi de fortes inhomogénéités : pour des inclinaisons $\theta$ positives (vers le haut du dispositif) les rapports de contraste sont les plus élevés, mais de nombreuses inversions de contraste ont lieu (zone B4, $\theta$>5°). Vers le bas du dispositif (pour des inclinaisons $\theta$ négatives), on observe peu d'inversions de contraste mais les rapports de contraste sont trop faibles (zone A4, $\theta$<-10°) pour permettre la dynamique électro-optique nécessaire à l'affichage d'image vidéo. Par exemple, les rapports de contraste entre les niveaux NG1 à NG8 et le niveau NG0 à une inclinaison $\theta$=-45°, sont respectivement de 1.00, 0.95, 0.95, 0.97, 1.02, 1.09, 1.15 et 1.35.

A titre d'exemple, de tels résultats sont obtenus pour des dispositifs connus avec les caractéristiques suivantes :

- cristal liquide de type merck ZLI-5080,
- différence de marche optique ($n_e$ - $n_o$) X d =475 nm, $n_e$ étant l'indice extraordinaire et $n_o$ l'indice ordinaire,
- angle de l'hélice 90°,
- orientation des molécules sur le substrat 3: $\phi$ = 45°,
- pré-inclinaison des molécules imposées par les substrats : 1.5°,
- polariseur de type SANRITZ LC2-9218,
- tension de 1,68 volts, 2,36 volts, 2,64 volts, 2,94 volts, 3,14 volts, 3,39 volts, 3,97 volts et 5 volts pour les niveaux repérés NG0 à NG8 respectivement.

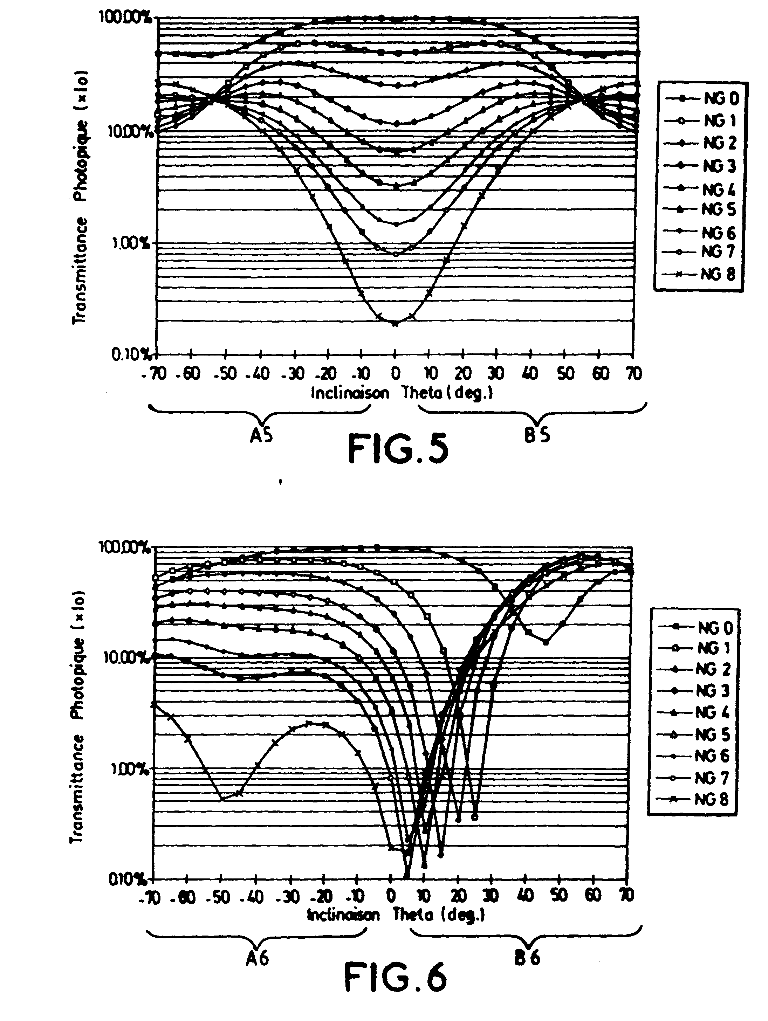

Les performances électrooptiques du dispositif lorsqu'on intercale les couches biréfringentes 6 et 7 selon le mode de réalisation de l'invention de la figure 1c, sont décrites par les figures 5 et 6.

La figure 5 montre l'évolution pour un même exemple de dispositif selon la présente invention, de la transmittance photopique théorique des différents niveaux des gris, lorsque l'inclinaison $\theta$ de la direction d'observation (R) change suivant l'azimut horizontal ($\phi$=0), parallèle à l'axe (ox). On constate que l'inhomogénéité des transmittances est fortement réduite par rapport à celle de la figure 3 et que les inversions de contraste ont été repoussées vers de fortes inclinaisons $\theta$ au-delà de ±50°(zones A5 et B5).

La figure 6 montre l'évolution, pour un exemple de dispositif selon la présente invention, de la transmittance photopique théorique des mêmes niveaux des gris, lorsque l'inclinaison $\theta$ de la direction d'observation change suivant l'azimut vertical ($\phi$=90°), parallèle à l'axe (oy). On observe que les inhomogénéïtés aux inclinaisons $\theta$ positives (vers le haut du dispositif) sont fortement accrues (zone B6) mais que vers le bas du dispositif (pour des inclinaisons $\theta$ négatives) elles restent faibles malgré une forte amélioration du contraste par rapport au cas de la figure 4 (zone A6) de sorte que l'affichage d'images vidéo est possible dans une large zone angulaire d'observation.

Pour reprendre l'exemple des rapports de contraste à l'inclinaison $\phi$=-45° citées plus haut, ceux-ci deviennent respectivement 1.06, 1.38, 2.03, 2.78, 4.28, 7.50, 12.38 et 134.57. Toujours à titre d'exemple, de tels résultats sont obtenus avec deux films biréfringents dont la structure biaxiale de l'anisotropie des indices de réfraction est un "cigare applati" ou "coussin horizontal" ($nz<no$) et dont les caractéristiques sont :

- films de 140nm de POLATECHNO CO., LTD,
- différence de marche optique dans le plan du film :

$$(n_e - n_o) * d = x137.5 \text{ nm},$$

- différence de marche optique dans la section du film

$$(n_z - n_o)*d = -220.5 \text{ nm}$$

- rapport de biaxialité $r = (n_z - n_o)/(n_e - n_o) = -1,6$.

D'une manière générale, les meilleurs résultats sont obtenus avec des films biréfringents tels que leurs retards $\Delta n = (n_e - n_o)xd$ sont compris entre 50 et 300 nm et que leurs rapports de biaxialité $(n_z - n_o)/(n_e - n_o)$ sont compris entre 0 et -3.

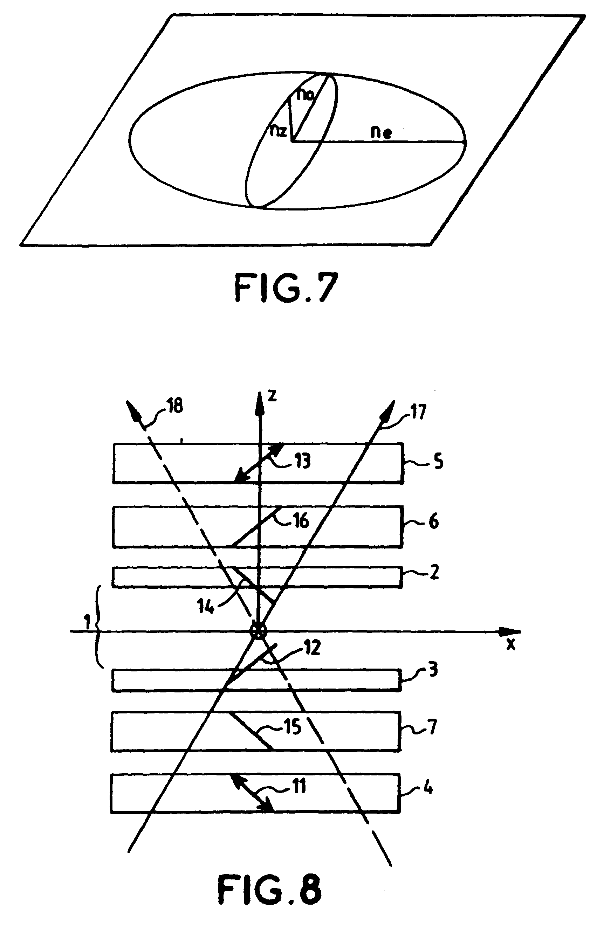

La figure 7 décrit la structure biaxiale de l'anisotropie des indices de réfraction des films utilisés, (P) étant le plan des films, $n_o$ l'indice ordinaire, ne l'indice extraordinaire et nz l'indice perpendiculaire au plan du film.

Parmi les trois dispositions décrites dans les figures 1a à 1c, celle de la figure 1c est préférable car elle permet de conserver la symétrie qu'avait le dispositif avant l'ajout des couches biréfringentes 6 et 7. Cette symétrie permet d'obtenir une évolution symétrique de la transmittance photopique des différents niveaux de gris pour des inclinaisons θ de la direction d'observation (R) symétrique par rapport au plan vertical (zoy), symétrie qu'on observe sur les figures 3 et 5.

Cette symétrie du dispositif est illustrée par la figure 8 qui montre en coupe un dispositif selon le troisième mode de réalisation de l'invention des figures 1c et 2. Les niveaux 4 et 5 sont les polariseurs croisés. Les sens passants, respectivement 11 et 13, de ces polariseurs sont croisés avec l'indice extraordinaire ne des molécules du cristal liquide 1. Les films 6 et 7 sont des films de compensation, l'orientation 16 et 15 de leurs indices extraordinaires respectifs sont croisés. La lumière incidente arrive, par exemple, par au-dessous de l'écran selon l'axe (oz), c'est à dire sur le film 4. La direction 17 représente ce que voit un observateur qui serait décalé selon l'axe (ox) de manière à ce que la lumière lui parvienne avec une inclinaison θ par rapport à la normale (oz) dans la direction 17. Une rotation de 180° autour de l'axe (Ox) permet de superposer le polariseur 4, la couche biréfringente 7, les molécules de cristal liquide proches du substrat 3 avec l'analyseur 5, la couche biréfringente 6, les molécules proches du substrat 2 respectivement. Ainsi, la modulation de la lumière qui traverse le dispositif suivant la direction 17 est la même que pour celle qui traverse le dispositif suivant la direction 18, symétrique de 17 par rapport au plan (yoz). La compensation conserve donc la symétrie de la cellule selon l'axe (ox) à la condition de mettre deux films croisés, un devant, un derrière. Avec un seul film, on aurait quand même une amélioration de l'angle de vue, mais en perdant cette symétrie et donc celle des figures 3 et 5.

La configuration des polariseurs est telle que les sens passants 13 et 11 des polariseurs 5 et 4 sont croisés avec les molécules de cristal liquide 1 les plus proches -les directions de ces dernières étant repérées sur la figure 8 par les directions 12 et 14- avec un angle de 80° à 100°. De plus, la configuration des films 6 et 7 est telle que les directions de leur indice extraordinaire sont croisées d'un angle entre 60° et 120° avec ces mêmes molécules de cristal liquide.

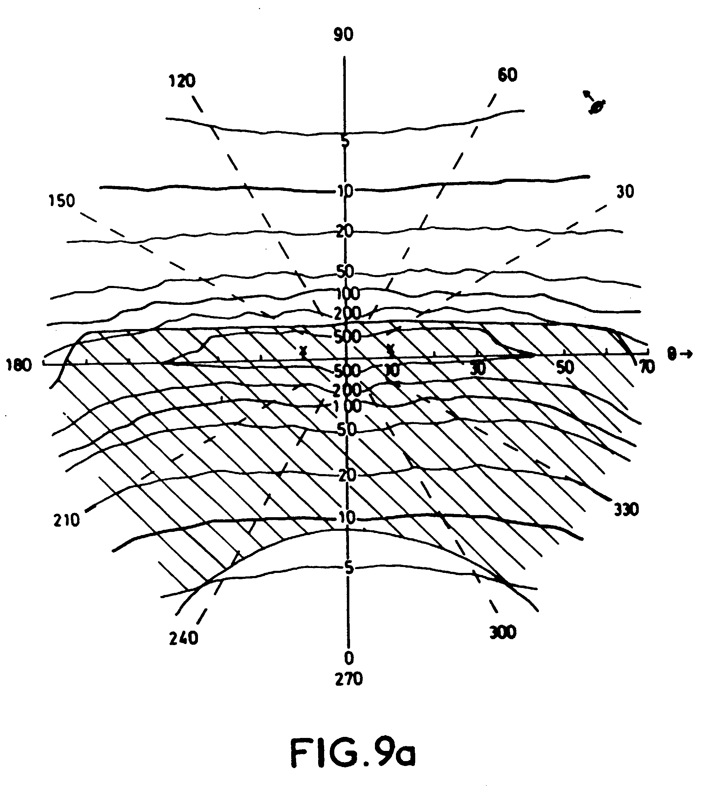

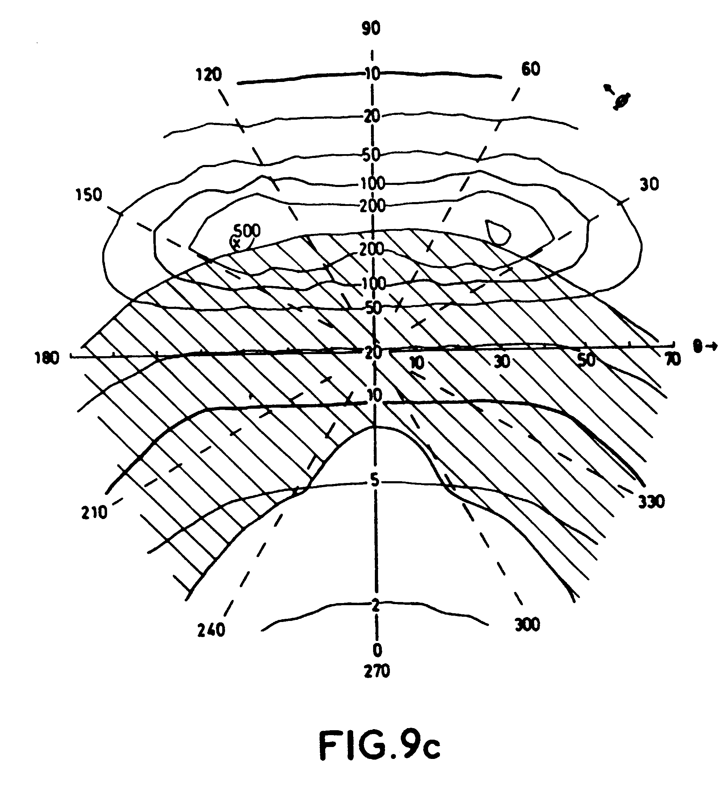

En prenant des films selon la configuration des figures 1c, 2 et 8, et de même rapport r de biaxialité que ceux donnés en exemple (r=-1,6) mais de retard (ne-no)xd différent (par exemple (ne - no)xd = 80 mn) on obtient le conoscope de la figure 9a. Ce conoscope est de type "plat" et son intérêt tient au fait que le contraste selon l'horizontal est très bon (200 à θ ± 70°, φ = 0) et qu'il n'y a pas d'inversion de niveaux de gris dans la bande hachurée.

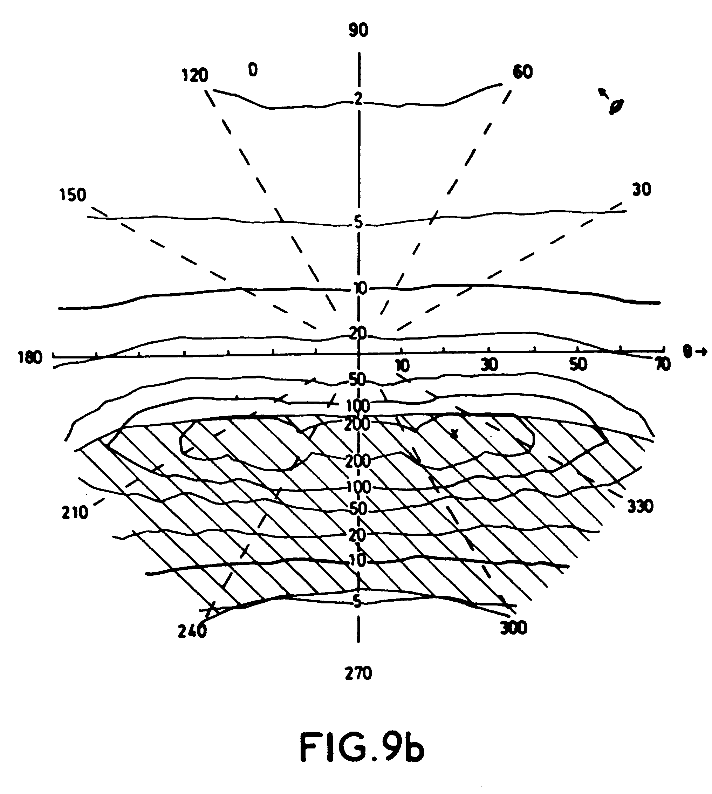

Puis, si l'on décroise les films de 7° chacun (par exemple), de sorte que les directions de l'indice de réfraction maximum 15 et 16 (figures 2 et 8) se rapproche de l'axe x pour ne former qu'un angle de 45° - 7° = 38° avec cet axe, les directions passantes 11 et 13 du polariseur 4 et de l'analyseur 5 gardant leurs positions croisées à 45° de l'axe x, on obtient la conoscope de la figure 9b pour lequel il n'y a pas d'inversion de constraste dans la zone hachurée. L'angle entre les directions 15 et 16 fait alors 104°.

La configuration de la figure 9b est très intéressante pour les applications où l'écran est regardé par un observateur mobile, ou par plusieurs observateurs sous un angle d'incidence de -50°<0<50° et des azimuts compris entre 195 et 345°, (comme par exemple dans une cabine de pilotage d'avion), soit vers le bas de la cellule. En utilisant la cellule à l'envers, ce qui revient à retourner les conoscopes, l'effet est alors visible pour des azimuts compris entre 15° et 165°, soit vers le haut. Ces zones sont sans inversion de gris, et permettent l'affichage d'images vidéo..

Un perfectionnement de la présente invention consiste à réaliser un écran de visualisation dont le décroissement des lames serait ajustable pour l'observateur grâce à un simple bouton, les lames étant mobiles de part et d'autre des plaques enfermant le cristal liquide.

La présente invention s'applique à tous les types de dispositif d'affiche électrooptique modulant directement la lumière les traversant utilisés soit en transmission, soit en réflexion, soit en projection sur un écran. De préférence, elle s'applique à la réalisation d'un écran plat à cristaux liquides et à matrice active adressée par des circuits de commande périphériques ou intégrés, permettant d'afficher des images vidéo monochromes ou en couleurs.

**Revendications**

1. Cellule électrooptique comportant:

une couche (1) de cristaux liquides twistée insérée entre un premier (3) et un second (2) substrat;

un film polariseur (4) placé sur la face extérieure du second substrat et un film analyseur (5) placé sur la face extérieure du premier substrat, le sens passant du film polariseur et le sens passant du film analyseur étant croisés et le sens passant de chaque film polariseur et analyseur étant croisé avec la direction d'alignement des molécules de la couche de cristaux liquides ancrés respectivement sur la face intérieure du premier et du second substrat sous un angle compris entre 80° et 100° ;

au moins un film biréfringent à anisotropie d'indices de réfraction biaxe (6) placé sur la face extérieure soit du premier soit du second substrat, ledit film biréfringent étant orienté de sorte que l'indice de réfraction maximum se trouve dans une direction (15) parallèle à la direction du sens passant du film polariseur ou analyseur placé sur la même face extérieure que ledit film biréfringent, les indices de réfraction $N_x$, $N_y$, $N_z$ dudit film biréfringent satisfaisant aux inéquations:

$N_z < N_x$ et $N_z < N_y$,

$N_z$ étant dans la direction normale au film biréfringent.

2. Cellule électrooptique selon la revendication 1, dans laquelle ledit film biréfringent (6) est situé entre le film polariseur (4) et le premier substrat (3).

3. Cellule électrooptique selon la revendication 1, dans laquelle ledit film biréfringent (6) est situé entre le film analyseur (5) et le second substrat (2).

4. Cellule électrooptique selon la revendication 1, qui comporte deux films biréfringents (6), l'un étant situé entre le film polariseur (4) et le premier substrat (3), et le second étant situé entre le film analyseur (5) et le second substrat (2).

5. Cellule électrooptique selon l'une quelconque des revendications précédentes, dans laquelle pour chaque film biréfringent la direction (15, 16) de l'indice extraordinaire $n_e$ correspondant à l'indice de réfraction maximum est croisée avec la direction d'alignement des molécules de la couche de cristaux liquides ancrés respectivement sur la face intérieure du substrat le plus proche sous un angle compris entre 70° et 110°.

6. Cellule électrooptique selon l'une quelconque des revendications précédentes, dans laquelle le retard $\Delta n = (n_e - n_o)d$ entre l'indice extraordinaire $n_e$ et l'indice ordinaire $n_o$ pour chaque film biréfringent est compris entre 50 et 300 nm, d étant l'épaisseur dudit film.

7. Cellule électrooptique selon l'une quelconque des revendications précédentes, dans laquelle le rapport de biaxialité $r = (N_z - n_o)/(n_e - n_o)$ est compris entre -3 et 0 pour chaque film biréfringent.

8. Cellule électrooptique selon l'une quelconque des revendications précédentes, dans laquelle le cristal liquide (1) est du type nématique en hélice dont la torsion totale des molécules est comprise entre 80° et 100°.

9. Ecran à cristaux liquides comportant une cellule électrooptique selon l'une quelconque des revendications précédentes comportant une pluralité d'éléments images adressés par des circuits périphériques ou intégrés.

10. Ecran selon la revendication 9, dans lequel le ou les films biréfringents sont mobiles permettant à l'observateur d'en ajuster le décroisement.

**Patentansprüche**

1. Elektro-optische Zelle, enthaltend:

eine Schicht (1) aus wendelförmigen Flüssigkristallen, die zwischen einem ersten (3) und einem zweiten (2) Substrat eingefaßt ist; einen Polarisatorfilm (4) auf der Außenfläche des zweiten Substrats und einen Analysatorfilm (5) auf der Außenfläche des ersten Substrats, wobei die Durchlaßrichtung des Polarisatorfilms und die Durchlaßrichtung des Analysatorfilms einander kreuzen und die Durchlaßrichtung jedes Polarisator- und Analysator-Films die Richtung der Anordnung der Moleküle dieser Flüssigkristallschicht, die jeweils auf der Innenfläche des ersten und des zweiten Substrats angeordnet sind, unter einem Winkel zwischen 80° und 100° kreuzen; wenigstens einen doppelbrechenden Film (6) mit einer Anisotropie von zweiachsigen Brechungsindices, der auf der Außenfläche entweder des ersten oder des zweiten Substrats liegt, wobei der doppelbrechende Film derart ausgerichtet ist, daß der Index der maximalen Brechung in einer Richtung (15) parallel zu der Durchlaßrichtung des Polarisator- oder Analysator-Films liegt, der auf derselben Außenfläche wie der doppelbrechende Film liegt, wobei die Brechungsindices $N_x$, $N_y$, $N_z$ des doppelbrechenden Films folgenden Ungleichungen genügen:

$N_z < N_x$ und $N_z < N_y$,

wobei $N_z$ die zu dem doppelbrechenden Film senkrechte Richtung ist.

2. Elektro-optische Zelle nach Anspruch 1, in der der doppelbrechende Film (6) zwischen dem Polarisatorfilm (4) und dem ersten Substrat (3) liegt.

3. Elektro-optische Zelle nach Anspruch 1, in der der doppelbrechende Film (6) zwischen dem Analysatorfilm (5) und dem zweiten Substrat (2) liegt.

4. Elektro-optische Zelle nach Anspruch 1, die zwei doppelbrechende Filme (6) enthält, von denen einer zwischen dem Polariatorfilm (4) und dem ersten Substrat (3) und der zweite zwischen dem Analysatorfilm (5) und dem zweiten Substrat (2) liegt.

5. Elektro-optische Zelle nach einem der vorangehenden Ansprüche, in der für jeden doppelbrechenden Film die Richtung (15, 16) des außergewöhnlichen Index $n_e$, der dem Index der maximalen Brechung entspricht, die Richtung der Anordnung der Moleküle der Flüssigkeitkristallschicht, die jeweils mit der Innenfläche des nächsten Substrats verbunden ist, unter einem Winkel zwischen 70° und 110° kreuzt.

6. Elektro-optische Zelle nach einem der vorangehenden Ansprüche, in der die Verzögerung $\Delta n = (n_e - n_o)d$ zwischen dem außergewöhnlichen Index $n_e$ und dem gewöhnlichen Index $n_o$ für jeden doppelbrechenden Film zwischen 50 und 300 nm liegt, wobei d die Dicke des Films ist.

7. Elektro-optische Zelle nach einem der vorangehenden Ansprüche, in der der Wert der Zweiachsigkeit $r = (N_z - n_o)/(n_e - n_o)$ für jeden doppelbrechenden Film zwischen -3 und 0 liegt.

8. Elektro-optische Zelle nach einem der vorangehenden Ansprüche, in der das Flüssigkristall (1) von nematischer Art in Wendelform ist, deren Gesamttorsion der Moleküle zwischen 80° und 100° liegt.

9. Flüsigkristallschirm mit einer elektro-optischen Zelle nach einem der vorangehenden Ansprüche mit einer Vielzahl von Bildelementen, die durch periphere oder integrierte Schaltungen adressiert werden.

10. Schirm nach Anspruch 9, in dem der oder die doppelbrechenden Film(e) beweglich sind und dem Betrachter eine Einstellung der Kreuzung ermöglichen.

**Claims**

1. Electrooptic cell, which includes:

a twisted liquid-crystal layer (1) inserted between a first substrate (3) and a second substrate (2);

a polarizer film (4) placed on the outer face of the second substrate and an analyzer film (5) placed on the outer face of the first substrate, the transmission direction of the polarizer film and the transmission direction of the analyzer film being crossed and the transmission direction of each polarizer and analyzer film being crossed with the direction of alignment of the molecules of the layer of liquid-crystals anchored respectively on the inner face of the first substrate and of the second substrate at an angle lying between 80° and 100°;

at least one birefringent film (6) having biaxial refractive index anisotropy placed on the outer face either of the first substrate or of the second substrate, the said birefringent file being oriented so that the maximum refractive index is in a direction (15) parallel to the transmission direction of the polarizer or analyzer film placed on the same outer face as the said birefringent film, the refractive indices $n_x$, $n_y$, $n_z$ of the said birefringent film satisfying the inequalities:

$$n_z < n_x \text{ and } n_z < n_y,$$

$n_z$ being in the direction normal to the birefringent film.

2. Electrooptic cell according to Claim 1, in which the said birefringent film (6) is located between the polarizer film (4) and the first substrate (3).

3. Electrooptic cell according to Claim 1, in which the said birefringent film (6) is located between the analyzer film (5) and the second substrate (2).

4. Electrooptic cell according to Claim 1, which includes two birefringent films (6), one being located between the polarizer film (4) and the first substrate (3), and the second being located between the analyzer film (5) and the second substrate (2).

5. Electrooptic cell according to any one of the preceding claims, in which, for each birefringent film, the direction (15, 16) of the extraordinary index $n_e$ corresponding to the maximum refractive index is crossed with the direction of alignment of the molecules of the layer of liquid crystals anchored respectively on the inner face of the closest substrate at an angle lying between 70° and 110°.

6. Electrooptic cell according to any one of the preceding claims, in which the retardation $\Delta n = (n_e - n_o)d$ between the extraordinary index $n_e$ and the ordinary index $n_o$ for each birefringent film lies between 50 and 300 nm, d being the thickness of the said film.

7.  Electrooptic cell according to any one of the preceding claims, in which the biaxiality ratio $r = (n_z - n_o)/(n_e - n_o)$ lies between -3 and 0 for each birefringent film.

8.  Electrooptic cell according to any one of the preceding claims, in which the liquid crystal (1) is of the twisted-nematic type, the total twist of the molecules of which lies between 80° and 100°.

9.  Liquid-crystal screen, which includes an electrooptic cell according to any one of the preceding claims which includes a plurality of pixels addressed by peripheral or integrated circuits.

10. Screen according to Claim 9, in which the birefringent film or films can be moved, enabling an observer to adjust the uncrossing thereof.

FIG.1A

FIG.1B

FIG.1C

FIG.2

FIG.3

FIG.4

FIG.5

FIG.6

FIG.7

FIG.8

FIG.9a

FIG.9b

FIG.9c